# EUROPEAN PATENT SPECIFICATION

(11) **EP 1 748 202 B1**
(45) Date of publication and mention of the grant of the patent: **07.01.2009**
(21) Application number: 06015718.7
(22) Date of filing: 27.07.2006
(51) Int. Cl.: F16C 33/74, F01D 25/18, F16C 33/72

(54) **Oil-leak prevention structure**
Anordnung zum Vermeiden eines Lecks von Öl
Structure pour éviter les fuites d'huile

(30) Priority: 29.07.2005 JP 2005220099
(43) Date of publication of application: 31.01.2007
(73) Proprietor: TOYOTA JIDOSHA KABUSHIKI KAISHA, Toyota-shi, Aichi-ken, 471-8571 (JP)
(72) Inventor: Shiba, Toshimitsu, Toyota-shi Aichi-ken 471-8571 (JP); Ishikawa, Makoto, Toyota-shi Aichi-ken 471-8571 (JP); Sakai, Kazuhito, Toyota-shi Aichi-ken 471-8571 (JP); Asada, Toshiaki, Toyota-shi Aichi-ken 471-8571 (JP); Suzuki, Tomoaki, Toyota-shi Aichi-ken 471-8571 (JP)
(74) Representative: Kuhnen & Wacker

(56) References cited:
- EP-A- 1 748 180
- WO-A-20/06016668
- WO-A-20/07105109
- DE-A1- 3 809 191
- FR-A- 2 756 014
- JP-A- 2003 083 216

## Description

### BACKGROUND OF THE INVENTION

### 1. Field of the Invention

The invention relates to an oil-leak prevention structure for a starting device of an internal combustion engine.

### 2. Description of the Related Art

Japanese Patent Application Publication No. JP-A-2003-83216 describes a starting device for an internal combustion engine, in which the pinion of the starter motor remains constantly meshed with a ring gear connected to the crankshaft (refer to page 2 and FIG. 7). In this configuration, a one-way clutch is provided between the gear portion and the center portion of the ring gear so that the rotational force is not transmitted to the starter motor from the engine after the engine has started. This prevents the over-speeding of the starter motor. Because the one-way clutch is provided, the ring gear needs to be supported such that the gear portion is rotatable. Therefore, a bearing is provided between the gear portion and the crankshaft.

In this constant-mesh starting device, the ring gear is connected to a large number of components. As a result, the ring gear tends to have a large diameter. If the ring gear has a large diameter, the lower portion of the ring gear is positioned near the opening of an oil pan to which oil is returned. Thus, if the surface of the oil in the oil pan greatly moves while the engine operates, the oil may flow back and come into contact with the lower portion of the ring gear through the opening.

When the ring gear has a large diameter as described above, a seal member that prevents oil from leaking onto the ring gear must also have a large diameter. Therefore, the lower portion of the seal member is positioned near the opening of the oil pan. As a result, oil may flow back and flow through the opening, over the seal member, and adhere to the seal member. Because the oil that flows back over the seal member has not passed through an oil filter, foreign substances deposited in the oil pan, such as metal shavings, may be carried to the seal member.

Therefore, the foreign substances may become trapped by the seal member. In this case, complete sealing cannot be provided, and the oil may leak. Even if foreign substances are not carried to the seal member, high hydraulic pressure may be applied to the seal member due to the backflow of oil, and the seal lip of the seal member may not withstand the high hydraulic pressure. In this case as well, oil leaks may occur.

Such oil leaks may occur not only in the constant-mesh starting device, but also in a starting device in which a pinion meshes with a ring gear when the engine is started, particularly if the lower portion of the ring gear is positioned near the opening of an oil pan, and a seal member is provided near the opening of the oil pan.

Document EP 1 748 202 A2, constituting art according to Art. 54(3) EPC, teaches an oil-leak prevention structure that prevents oil from leaking onto a starting device of an internal combustion engine. In the oil-leak prevention structure according said reference, a dam is provided that blocks any backflow of oil from an oil pan from directly contacting a seal member provided between a ring gear of the starting device and an oil pan. An oil-return hole may also be provided so that any oil that has flowed between the dam and the ring gear can be smoothly returned to the oil pan. This reliably prevents oil leaks because foreign substances are less likely to become trapped by the seal member, and prevents excessive increases in hydraulic pressure from being applied to the seal member.

From WO 2007/105109 A1 also constituting art according to Art. 54(3) EPC, a lubrication structure of a cranking rotational force transmission mechanism for an internal combustion engine is known. There, lubricant-return holes are provided in the intermediate portion of the ring gear. Thus, the lubricant stagnating above the first oil sealing member can be easily discharged to the oil pan side via the lubricant-return holes even when the ring gear has stopped rotating in response to the starter motor being turned off after completion of the start of the internal combustion engine. As such, the level of the surface of lubricant stagnating between the ring gear and the outer race member does not rise, and therefore the lubricant surface virtually does not reach the outer race and the one-way clutch that are rotating while the internal combustion engine is running. Thus, bubbling of lubricant and production of sludge, which may otherwise be caused by agitation of the lubricant surface, can be prevented.

### SUMMARY OF THE INVENTION

The invention prevents oil leaks in a starting device for an internal combustion engine, in which the lower portion of a seal member, which provides sealing to prevent oil from leaking onto the ring gear, is positioned near the opening of an oil pan.

Hereinafter, means for achieving the object, and the effects will be described. An aspect of the invention relates to the oil-leak prevention structure for a starting device of an internal combustion engine. The starting device includes a ring gear that transmits a rotational force from a starter motor to the crankshaft of the engine by rotating the crankshaft. In the starting device, the lower portion of a seal member, which provides sealing to prevent oil from leaking onto the ring gear, is positioned near the opening of an oil pan. In the oil-leak prevention structure, a dam is formed between the lower portion of the seal member and the opening of the oil pan.

If oil flows back from the oil pan through the opening, the backflow of oil may directly hit the seal member. In this case, foreign substances may become trapped by the seal member, or excessively high hydraulic pressure may be applied to the seal member. In the oil-leak prevention structure, a dam is formed. Therefore, even if oil flows back from the oil pan through the opening, the backflow of oil is unlikely to hit the seal member directly. This prevents foreign substances from becoming trapped by the seal member, and an excessive increase in the hydraulic pressure applied to the seal member. Thus, oil leaks due to incomplete sealing can be minimized.

In the oil-leak prevention structure, the position of the top of the dam may be higher than the position of the top of the space sealed by the lowest portion of the seal member.

The lowest portion of the seal member is positioned near the surface of the oil in the oil pan. The backflow of oil would directly hit the lowest portion of the seal member. However, in the above-described oil-leak prevention structure, because the position of the top of the dam is higher than the position of the top of the space sealed by the lowest portion of the seal member, it is very unlikely that the backflow of oil will come into contact with the seal member. This reliably prevents foreign substances from becoming trapped by the seal member, and an excessive increase in the hydraulic pressure applied to the seal member. Thus, oil leaks can be effectively prevented.

An oil-return hole may be formed in the lower portion of the dam. In this case, the oil-return hole provides communication between the oil pan and the area between the dam and the ring gear.

By forming an oil-return hole in the lower portion of the dam, the oil between the dam and the ring gear can be returned to the oil pan. Further, even if foreign substances are trapped between the dam and the ring gear from the oil pan or from a member other than the oil pan, the foreign substances can be smoothly discharged to the oil pan through the oil-return hole. This effectively prevents accumulation of foreign substances between the dam and the ring gear.

When the engine operates, a certain amount of oil is present between the dam and the ring gear, and oil flows to the oil pan from the area between the dam and the ring gear through the oil-return hole. This suppresses the backflow of oil from the oil pan through the oil-return hole.

The position of the top of the oil-return hole may be lower than the position of the top of the space sealed by the lowest portion of the seal member.

In this structure, even if oil flows back from the oil pan through the oil-return hole, the backflow of oil does not directly contact the seal member. This prevents foreign substances from becoming trapped by the seal member, and an excessive increase in the hydraulic pressure applied to the seal member. Thus, oil leaks can be reliably prevented.

In the above-described structure, the dam may be formed integrally with an oil retainer that surrounds the crankshaft. In this case, the dam has a ring shape or an arc shape. The inner diameter of the dam is smaller than the inner diameter of the oil retainer. The seal member is fitted to the inner surface of the oil retainer. An oil-return pipe may be fixed to the lower portion of the dam. The oil-return pipe provides communication between the oil pan and the area between the dam and the ring gear.

Because the oil-return pipe is fixed to the lower portion of the dam as described above, the oil between the dam and the ring gear can be smoothly returned to the oil pan. Further, even if foreign substances are trapped between the dam and the ring gear from the oil pan, or from a member other than the oil pan, the foreign substances can be smoothly discharged to the oil pan through the oil-return pipe. This effectively prevents accumulation of foreign substances between the dam and the ring gear.

The position of the top of the inner periphery of the oil-return pipe may be lower than the position of the top of the space sealed by the lowest portion of the seal member.

In this structure, even if oil flows back from the oil pan through the oil-return pipe, the backflow of oil does not directly contact the seal member. This prevents foreign substances from becoming trapped by the seal member, and an excessive increase in the hydraulic pressure applied to the seal member. Thus, oil leaks can be reliably prevented, as in the case where the oil-return hole is formed.

The ring gear may transmit the rotational force to the crankshaft from the starter motor via a one-way clutch, and the seal member may include a first seal member and a second seal member. In this case, the first seal member seals the space between the ring gear and the one-way clutch. The second seal member seals the space between the ring gear and the oil pan or a member that contacts the oil pan. The position of the top of the dam is higher than the position of the top of the space sealed by the lowest portion of the first seal member or the second seal member that is closer to the crankshaft than the other seal member.

Particularly when the one-way clutch is provided in the ring gear, the two seal members, i.e., the first seal member and the second seal member are employed. In the above-described structure, there is almost no possibility that the backflow of oil directly hits contact areas between the first seal member and the one-way clutch, and between the second seal member and the ring gear. This reliably prevents foreign substances from becoming trapped between the first seal member and the one-way clutch, and between the second seal member and the ring gear. This also reliably prevents an excessive increase in the hydraulic pressure applied to the contact areas. Thus, oil leaks can be effectively prevented.

In the above-described structure, an oil-return hole may be formed in the lower portion of the dam. In this case, the oil-return hole provides communication between the oil pan and the area between the dam and the ring gear. The position of the top of the oil-return hole is lower than the position of the top of the space sealed by the lowest portion of the first seal member or the second seal member that is more distant from the crankshaft than the other seal member.

By forming the oil-return hole, the oil between the dam and the ring gear can be smoothly returned to the oil pan. Further, foreign substances between the dam and the ring gear can be smoothly discharged to the oil pan through the oil-return hole.

Further, in the above-described structure, even if oil flows back from the oil pan through the oil-return hole, the backflow of oil does not directly hit the contact areas between the first seal member and the one-way clutch, and between the second seal member and the ring gear as well. This reliably prevents foreign substances from becoming trapped between the first seal member and the one-way clutch, and between the second seal member and the ring gear. This also reliably prevents an excessive increase in the hydraulic pressure applied to the contact areas. Thus, oil leaks can be effectively prevented.

Further, the dam may be formed integrally with an oil retainer that surrounds the crankshaft. In this case, the dam has a ring shape or an arc shape. The inner diameter of the dam is smaller than the inner diameter of the oil retainer. The second seal member is fitted to the inner surface of the oil retainer. An oil-return pipe is fixed to the lower portion of the dam. The oil-return pipe provides communication between the oil pan and the area between the dam and the ring gear. The position of the top of the inner periphery of the oil-return pipe is lower than the position of the top of the space sealed by the lowest portion of the first seal member or the second seal member that is more distant from the crankshaft than the other seal member.

By forming the oil-return pipe, the oil between the dam and the ring gear can be smoothly returned to the oil pan. Further, foreign substances between the dam and the ring gear can be smoothly discharged to the oil pan through the oil-return hole.

Further, in the above-described structure, even if oil flows back from the oil pan through the oil-return pipe, the backflow of oil does not directly hit the contact areas between the first seal member and the one-way clutch, and between the second seal member and the ring gear. This reliably prevents foreign substances from becoming trapped between the first seal member and the one-way clutch, and between the second seal member and the ring gear. This also reliably prevents an excessive increase in the hydraulic pressure applied to the contact areas. Thus, oil leaks can be effectively prevented.

### BRIEF DESCRIPTION OF THE DRAWINGS

The features, advantages thereof, and technical and industrial significance of this invention will be better understood by reading the following detailed description of example embodiments of the invention, when considered in connection with the accompanying drawings, in which:
FIG. 1 is a longitudinal cross sectional view showing the oil-leak prevention structure for a starting device of an internal combustion engine according to a first embodiment;
FIG. 2 is a longitudinal cross sectional view showing the oil-leak prevention structure for a starting device of an internal combustion engine according to a second embodiment; and
FIG. 3 is the longitudinal cross sectional view showing an oil-leak prevention structure for a starting device of an internal combustion engine according to a third embodiment.

### DETAILED DESCRIPTION OF THE EXAMPLE EMBODIMENTS

In the following description and the accompanying drawings, the present invention will be described in more detail with reference to example embodiments.

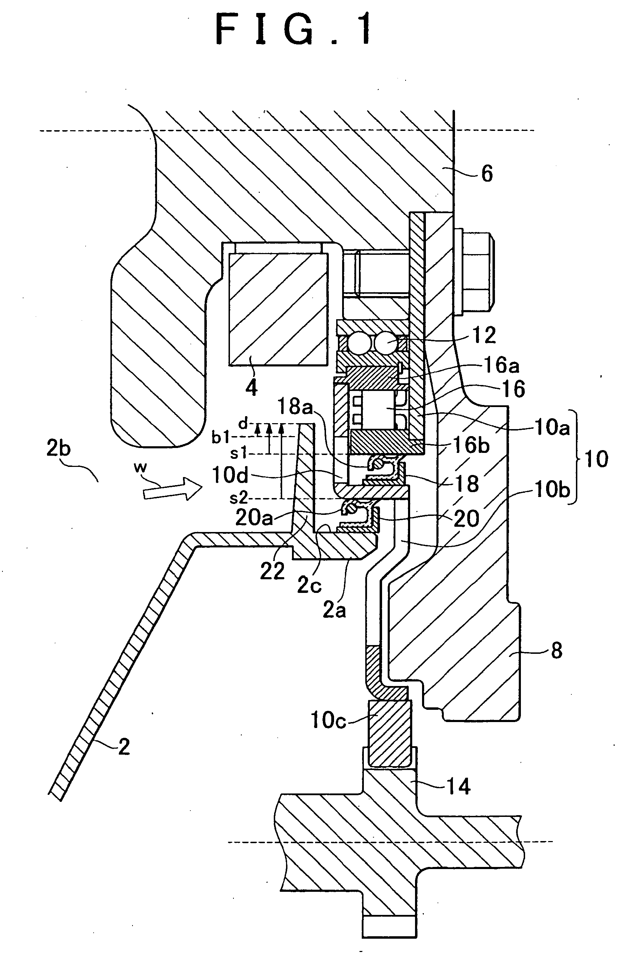

A first embodiment will be described. FIG. 1 shows the oil-leak prevention structure for a starting device of an internal combustion engine, that is, the structure that prevents oil from leaking onto the starting device. FIG. 1 is a cross sectional view showing the rear end of an oil pan 2 of an internal combustion engine and members around the oil pan 2. The rear end of a crankshaft 6 is positioned above the rear end of the oil pan 2. The rear end of the crankshaft 6 is rotatably supported by a rudder beam 4. A flywheel 8 and a ring gear 10 are connected to the rear end of the crankshaft 6. The ring gear 10 includes a center portion 10a and a ring plate 10b. The ring plate 10 constitutes the outer periphery of the ring gear 10. The center portion 10a and the flywheel 8 are fixed to the rear end of the crankshaft 6 by bolt. The center portion 10a and the flywheel 8 rotate together with the crankshaft 6.

The ring plate 10b of the ring gear 10 is connected to the outer periphery of the rear end of the crankshaft 6 via the inner race 16a of a one-way clutch 16 and a rolling bearing 12 (the one-way clutch 16 and the rolling bearing 12 will be described later). Accordingly, when the one-way clutch 16 is not engaged, the ring plate 10b rotates independently of the crankshaft 6. Further, a ring-shaped gear portion 10c is formed at the periphery of the ring plate 10b. The gear portion 10c is constantly engaged with a pinion 14 of a starter motor. The ring plate 10b of the ring gear 10 is rotated by the rotational force transmitted from the starter motor.

In the ring gear 10, the one-way clutch 16 is provided between the center portion 10b and the ring plate 10b. When the internal combustion engine starts, the starter motor rotates the ring plate 10b via the pinion 14, that is, torque is transmitted from the ring plate 10b to the one-way clutch 16. Then, the one-way clutch 16 engages the center portion 10a with the ring plate 10b. As a result, the starter motor rotates the crankshaft 6.

When the rotational speed of the crankshaft 6 and the center portion 10a is higher than the rotational speed of the ring plate 10b due to the output of the engine after the engine has started, the one-way clutch 16 is disengaged. This prevents over-speeding of the starter motor after the engine has started, though the pinion 14 is constantly engaged with the gear 10c of the ring gear 10.

Oil is supplied through an oil passage in the crankshaft 6 to lubricate the rolling bearing 12 and the one-way clutch 16. Because the one-way clutch 16 is provided between the center portion 10a and the ring plate 10b, oil leaks between the center portion 10a and the ring plate 10b need to be prevented. Therefore, a ring-shaped first seal member 18 is provided between the ring plate 10b and the outer race 16b of the one-way clutch 16. The outer race 16b is fixed to the center portion 10a. The first seal member 18 is fixed to the inner surface of the ring plate 10b. The first seal member 18 includes a seal lip 18a that is formed inside the first seal member 18. The seal lip 18a slidably contacts the outer surface of the outer race 16b. Thus, sealing is provided to prevent oil leaks.

Further, a second seal member 20 is provided outside the first seal member 18. The second seal member 20 has a diameter greater than that of the first seal member 18. As shown in FIG. 1, the lower portion of the second seal member 20 below the crankshaft 6 is fixed to the inner surface 2c of the rear end 2a of the oil pan 2. The upper portion of the second seal member 20 above the crankshaft 6 is fixed to the inner surface of the rear end of a cylinder block. The seal member 20 includes a seal lip 20a that is formed inside the second seal member 20. The seal lip 20a slidably contacts the outer surface of the ring plate 10b. Thus, sealing is provided to prevent oil leaks.

Thus, the lower portions of the two seal members 18 and 20 are positioned near the opening 2b of the oil pan 2. In this structure, after oil flows toward the ring gear 10 from the crankshaft 6, the oil is returned to the oil pan 2. Further, an oil-return hole 10d is formed in the ring plate 10b to discharge the oil that has flown into the one-way clutch 16 from the crankshaft 6. Because the oil-return hole 10d faces the opening 2b of the oil pan 2, the oil inside the one-way clutch 16 is also returned to the oil pan 2.

A dam 22 is formed between the opening 2b of the oil pan 2, and the lowest portions of the ring-shaped seal members 18 and 20 and the oil-return hole 10d. FIG. 1 shows the cross sections of the lowest portions of the ring gear 10 and the seal members 18 and 20 around the crankshaft 6.

The dam 22 extends upward from the rear end 2a of the oil pan 2. Accordingly, when oil between the dam 22 and the ring gear 10 flows past the dam 22, the oil flows to the oil pan 2 through the opening 2b.

The position "d" of the top of the dam 22 is higher than seal positions s1 and s2. The seal position s1 is the position of the top of the space sealed by the lowest portion of the seal lip 18a inside the lowest portion of the first seal member 18. The seal position s2 is the position of the top of the space sealed by the lowest portion of the seal lip 20a inside the lowest portion of the second seal member 20.

According to the first embodiment that has been described, the following effects can be obtained.
(1) As described above, the seal positions s1 and s2 are lower than the position "d" of the top of the dam 22. The seal position s1 is the position of the top of the space sealed by the lowest portion of the first seal member 18. The seal position s2 is the position of the top of the space sealed by the lowest portion of the second seal member 20. The first seal member 18 is closer to the crankshaft 6 than the second seal member 20. In this structure, if the oil inside the oil pan 2 is about to flow back toward the ring gear 10 through the opening 2b as shown by an arrow "w", the dam 22 blocks the flow of oil. As a result, the backflow of oil does not directly hit the contact areas between the seal lip 18 and the outer race 16b, and between the seal lip 20a and the ring plate 10b. Also, foreign substances are also prevented from being trapped between the seal lip 18a and the outer race 16b, and between the seal lip 20a and the ring plate 10b. Further, the hydraulic pressure applied to the contact areas does not excessively increase. Accordingly, complete sealing can be provided, and oil leaks can be prevented.

The position h1 of the top of the oil-return hole 10d formed in the ring plate 10b is also lower than the position "d" of the top of the dam 22. This effectively prevents the backflow of oil from hitting the contact area between the outer race 16b and the seal lip 18a, which is exposed to the oil in the oil pan 2 via the oil-return hole 10d. Also, this reliably prevents foreign substances from becoming trapped between the seal lip 18a and the outer race 16b, and an excessive increase in the hydraulic pressure applied to the contact area between the outer race 16b and the seal lip 18a.

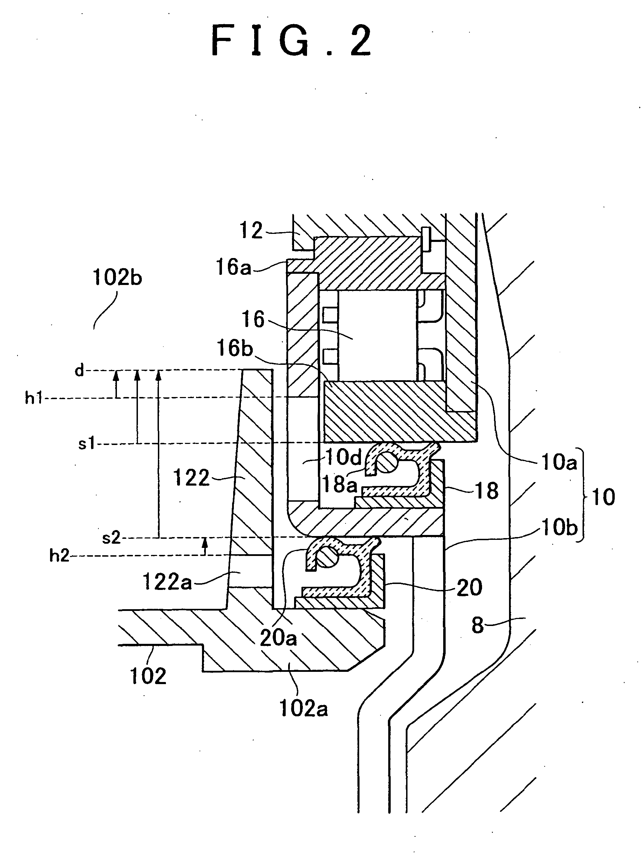

Next, a second embodiment will be described. In the second embodiment, a dam 122 is formed at the rear end 102a of the oil pan 102, the distance between the dam 122 and the ring gear 10 is less than the distance between the dam 22 and the ring gear 10 in the first embodiment, and an oil-return hole 122a is formed in the dam 122, as shown in the longitudinal cross sectional view of FIG. 2. The other members that are the same as in the first embodiment will be denoted by the same reference numerals.

As in the first embodiment, the position "d" of the top of the dam 122 is higher than the position h1 of the top of the oil-return hole 10d. The position h1 is higher than the seal position s1. The seal position s1 is higher than the seal position s2. Meanwhile, the position h2 of the top of the oil-return hole 122a formed in the dam 122 is lower than the seal position s2.

According to the second embodiment that has been described, the following effects are obtained.
(1) The same effects as in the first embodiment can be obtained.
(2) The oil-return hole 122a is formed in the lower portion of the dam 122. Therefore, the oil between the dam 122 and the ring gear 10 can be smoothly returned to the oil pan 102. Further, even if foreign substances are trapped between the dam 122 and the ring gear 10 from the oil pan or from a member other than the oil pan, the foreign substances can be smoothly discharged to the oil pan 102 through the oil-return hole 122a. This effectively prevents accumulation of foreign substances between the dam 122 and the ring gear 10.

When the engine operates, there is a certain amount of oil between the dam 122 and the ring gear 10. This suppresses the backflow of oil from the oil pan 102 through the oil-return hole 122a formed in the dam 122.

(3) The position h2 of the top of the oil-return hole 122a is lower than the seal positions s1 and s2. Therefore, even if oil flows back from the oil pan 102 through the oil-return hole 122a, the oil does not directly hit the contact areas between the seal lip 18a and the outer race 16b and between the seal lip 20a and the ring plate 10b. This prevents foreign substances from becoming trapped between the seal lip 18a and the outer race 16b, and between the seal lip 20a and the ring plate 10b. Also, this prevents an excessive increase in the hydraulic pressure applied to the contact areas. Accordingly, oil leaks can be effectively prevented.

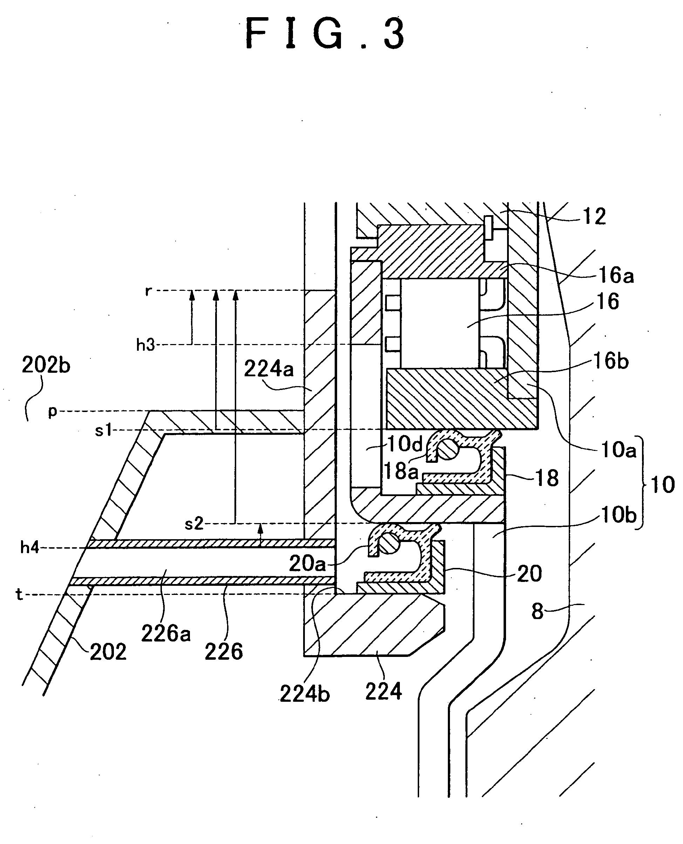

Next, a third embodiment will be described. In the third embodiment, a ring-shaped oil seal retainer 224 surrounds the crankshaft, as shown in the longitudinal cross sectional view of FIG. 3. The oil seal retainer 224 is fixed to the cylinder block and an oil pan 202. The second seal member 20 is fitted to the inner surface of the oil seal retainer 224.

A dam 224a is formed integrally with the oil seal retainer 224. The dam 224a has a ring shape or an arc shape. The inner diameter of the dam 224a is smaller than the inner diameter of the oil seal retainer 224. When the dam 224a has a ring shape, the dam 224a is integrated with the entire oil seal retainer 224. When the dam 224a has an arc shape, the dam 224a is integrated with the lower portion of the oil seal retainer 224 that faces the opening 202b of the oil pan 202. The position "r" of the top of the lowest portion of the dam 224a is higher than the position h3 of the top of an oil-return hole 10e formed in the ring plate 10b. The position h3 is higher than the seal position s1. The seal position s1 is higher than the seal position s2.

The position "p" of the edge of the opening 202b of the oil pan 202 is higher than the position "t" of the inner surface 224b of the lowest portion of the oil seal retainer 224 to which the second seal member 20 is fitted. Therefore, an oil-return pipe 226 is fixed to the lower portion of the dam 224a. The oil-return pipe 226 provides communication between the oil pan 202 and the area between the dam 224a and the ring gear 10. The axis of the oil-return pipe 226 is horizontal. Thus, the oil accumulated on the inner surface 224b of the oil seal retainer 224 can be returned into the oil pan 202 through the oil-return pipe 226.

The position h4 of the top of a passage 226a inside the oil-return pipe 226 is lower than the seal position s2. The passage 226a is equivalent to the oil-return hole.

According to the third embodiment that has been described, the following effects are obtained.
(1) The position "r" of the top of the lowest portion of the dam 224a is higher than the position "t" of the inner surface 224b of the lowest portion of the oil seal retainer 224. Also, the position "p" of the edge of the oil pan 202 is higher than the position "t". However, the oil or foreign substances accumulated between the dam 224a and the ring gear 10 can be smoothly discharged through the oil-return pipe 226. Thus, the passage 226a inside the oil-return pipe 226 has the same function as that of the oil-return hole 122a formed in the dam 122 in the second embodiment (FIG. 2). Accordingly, the same effect as in the second embodiment can be obtained.

Further, other embodiments will be described.
(a) In each of the above-described embodiments, a constant-mesh starting device is employed. However, the invention may be applied to a starting device in which a pinion is engaged with a ring gear by a magnet switch when an engine starts. That is, the invention may be applied to any internal combustion engine in which the lowest portion of a seal member that prevents oil from leaking onto the ring gear is positioned near the opening of an oil pan. The invention may be applied to the case where only one seal member is provided, and the case where three or more seal members are provided.

(2) In the third embodiment, the dam has a ring shape or an arc shape. In the first and second embodiments as well, the dam may have a ring shape or an arc shape. In this case, the position of the top of the lowest portion of the dam is higher than the position of the top of the oil-return hole formed in the ring plate 10b, and the seal positions s1 and s2. This effectively prevents foreign substances from becoming trapped between the seal lip 18a and the outer race 16b, and between the seal lip 20a and the ring plate 10b, and an excessive increase in the hydraulic pressure applied to the contact areas between the seal lip 18a and the outer race 16b, and between the seal lip 20a and the ring plate 10b.

## Claims

1. An oil-leak prevention structure for a starting device of an internal combustion engine, wherein the starting device includes a ring gear (10) that transmits a rotational force from a starter motor to a crankshaft (6) of an internal combustion engine by rotating the crankshaft (6), and a lower portion of a seal member (18, 20), which provides sealing to prevent oil from leaking onto the ring gear (10), is positioned near an opening (2b, 102b, 202b) of an oil pan (2, 102, 202), **characterized in that:**
a dam (22, 122, 224a) is formed between the lower portion of the seal member (18, 20) and the opening (2b, 102b, 202b) of the oil pan (2, 102, 202), wherein
a position of a top (d, r) of the dam (22, 122, 224a) is higher than a position (s1, s2) of a top of a space sealed by a lowest portion of the seal member (18, 20).

2. The oil-leak prevention structure according to claim 1, **characterized in that** an oil-return hole (122a) is formed in a lower portion of the dam (122), and the oil-return hole (122a) provides communication between the oil pan (102) and an area between the dam (122) and the ring gear (10).

3. The oil-leak prevention structure according to claim 2, **characterized in that** a position (h2) of a top of the oil-return hole (122a) is lower than a position (s1, s2) of a top of a space sealed by a lowest portion of the seal member (18, 20).

4. The oil-leak prevention structure according to claim 1, **characterized in that** the dam (224a) is formed integrally with an oil retainer (224) that surrounds the crankshaft (6), an inner diameter of the dam (224a) is smaller than an inner diameter of the oil retainer (224), the dam (224a) has a ring shape or an arc shape, the seal member (20) is fitted to an inner surface of the oil retainer (224), an oil-return pipe (226) is fixed to a lower portion of the dam (224a), and the oil-return pipe (226) provides communication between the oil pan (202) and an area between the dam (224a) and the ring gear (10).

5. The oil-leak prevention structure according to claim 4, **characterized in that** a position (h4) of a top of an inner periphery of the oil-return pipe (226) is lower than a position (s1, s2) of a top of a space sealed by a lowest portion of the seal member (18, 20).

6. The oil-leak prevention structure according to claim 1, **characterized in that** the ring gear (10) transmits the rotational force to the crankshaft (6) from the starter motor via a one-way clutch (16), the seal member (18, 20) includes a first seal member (18) and a second seal member (20), the first seal member (18) seals a space between the ring gear (10) and the one-way clutch (16), and the second seal member (20) seals a space between the ring gear (10) and the oil pan (2, 102, 202) or a member that contacts the oil pan (2, 102, 202), and a position (d, r) of a top of the dam (22, 122, 224a) is higher than a position (s1) of a top of a space sealed by a lowest portion of one of the first seal member (18) and the second seal member (20) that is closer to the crankshaft (6) than another of the first seal member (18) and the second seal member (20).

7. The oil-leak prevention structure according to claim 6, **characterized in that** an oil-return hole (122a) is formed in a lower portion of the dam (122), the oil-return hole (122a) provides communication between the oil pan (102) and an area between the dam (122) and the ring gear (10), and a position (h2) of a top of the oil-return hole (122a) is lower than a position (s2) of a top of a space sealed by a lowest portion of one of the first seal member (18) and the second seal member (20) that is more distant from the crankshaft (6) than another of the first seal member (18) and the second seal member (20).

8. The oil-leak prevention structure according to claim 7, **characterized in that** the dam (224a) is formed integrally with an oil retainer (224) that surrounds the crankshaft (6), the dam (224a) has a ring shape or an arc shape, an inner diameter of the dam (224a) is smaller than an inner diameter of the oil retainer (224), the second seal member (20) is fitted to an inner surface of the oil retainer (224), an oil-return pipe (226) is fixed to a lower portion of the dam (224a), the oil-return pipe (226) provides communication between the oil pan (202) and the area between the dam (224a) and the ring gear (10), a position (h4) of a top of an inner periphery of the oil-return pipe (226) is lower than the position (s2) of the top of the space sealed by the lowest portion of one of the first seal member (18) and the second seal member (20) that is more distant from the crankshaft (6) than the other of the first seal member (18) and the second seal member (20).

## Patentansprüche

1. Ölaustritt-Verhinderungsstruktur für eine Startvorrichtung eines Verbrennungsmotors, wobei die Startvorrichtung eine Verzahnung (10) beinhaltet, die eine Drehkraft von einem Startermotor an eine Kurbelwelle (6) eines Verbrennungsmotors überträgt, indem die Kurbelwelle (6) gedreht wird, und wobei ein unterer Bereich eines Abdichtungselements (18, 20), das eine Abdichtung bereitstellt, um zu verhindern, dass auf die Verzahnung (10) ein Öl austritt, in der Nähe einer Öffnung (2b, 102b, 202b) einer Ölwanne (2, 102, 202) positioniert ist, **dadurch gekennzeichnet, dass:**
eine Dammeinrichtung (22, 122, 224a) zwischen dem unteren Bereich des Abdichtungselements (18, 20) und der Öffnung (2b, 102, 202b) der Ölwanne (2, 102, 202) ausgebildet ist, wobei
eine Position einer Oberseite (d, r) der Dammeinrichtung (22, 122, 224a) höher ist als eine Position (s1, s2) einer Oberseite eines Raums, der durch einen untersten Bereich des Abdichtungselements (18, 20) abgedichtet ist.

2. Ölaustritt-Verhinderungsstruktur nach Anspruch 1, **dadurch gekennzeichnet, dass** eine Ölrückführöffnung (122a) in einem unteren Bereich der Dammeinrichtung (122) ausgebildet ist und dass die Ölrückführöffnung (122a) eine Verbindung zwischen der Ölwanne (102) und einem Bereich zwischen der Dammeinrichtung (122) und der Verzahnung (10) bereitstellt.

3. Ölaustritt-Verhinderungsstruktur nach Anspruch 2, **dadurch gekennzeichnet, dass** eine Position (h2) einer Oberseite der Ölrückführöffnung (122a) niedriger ist als eine Position (s1, s2) einer Oberseite eines Raums, der durch einen untersten Bereich des Abdichtungselements (18, 20) abgedichtet ist.

4. Ölaustritt-Verhinderungsstruktur nach Anspruch 1, **dadurch gekennzeichnet, dass** die Dammeinrichtung (224a) einstückig mit einer die Kurbelwelle (6) umgebenden Ölauffangeinrichtung (224) ausgebildet ist, ein Innendurchmesser der Dammeinrichtung (224a) geringer ist als ein Innendurchmesser der Ölauffangeinrichtung (224), die Dammeinrichtung (224a) ring- oder bogenförmig ausgebildet ist, das Abdichtungselement (20) an eine Innenoberfläche der Ölauffangeinrichtung (224) gepasst ist, ein Ölrückführrohr (226) an einem unteren Bereich der Dammeinrichtung (224a) befestigt ist und das Ölrückführrohr (226) eine Verbindung zwischen der Ölwanne (202) und einem Bereich zwischen der Dammeinrichtung (224a) und der Verzahnung (10) bereitstellt.

5. Ölaustritt-Verhinderungsstruktur nach Anspruch 4, **dadurch gekennzeichnet, dass** eine Position (h4) einer Oberseite eines Innenumfangs des Ölrückführrohrs (226) niedriger ist als eine Position (s1, s2) einer Oberseite eines Raums, der durch einen untersten Bereich des Abdichtungselements (18, 20) abgedichtet ist.

6. Ölaustritt-Verhinderungsstruktur nach Anspruch 1, **dadurch gekennzeichnet, dass** die Verzahnung (10) die Drehkraft vom Startermotor über eine Freilaufkupplung (16) an die Kurbelwelle (6) überträgt, das Abdichtungselement (18, 20) ein erstes Abdichtungselement (18) und ein zweites Abdichtungselement (20) beinhaltet, wobei das erste Abdichtungselement (18) einen Raum zwischen der Verzahnung (10) und der Freilaufkupplung (16) abdichtet und das zweite Abdichtungselement (20) einen Raum zwischen der Verzahnung (10) und der Ölwanne (2, 102, 202) abdichtet oder ein Element ist, das die Ölwanne (2, 102, 202) kontaktiert, und eine Position (d, r) einer Oberseite der Dammeinrichtung (22, 122, 224a) höher angeordnet ist als eine Position (s1) einer Oberseite eines Raums, der durch einen untersten Bereich von entweder dem ersten Abdichtungselement (18) oder dem zweiten Abdichtungselement (20), welches sich näher an der Kurbelwelle (6) befindet als das jeweils andere erste Abdichtungselement (18) oder zweite Abdichtungselement (20), abgedichtet ist.

7. Ölaustritt-Verhinderungsstruktur nach Anspruch 6, **dadurch gekennzeichnet, dass** eine Ölrückführöffnung (122a) in einem unteren Bereich der Dammeinrichtung (122) ausgebildet ist, die Ölrückführöffnung (122a) eine Verbindung zwischen der Ölwanne (102) und einem Bereich zwischen der Dammeinrichtung (122) und der Verzahnung (10) bereitstellt, und eine Position (h2) einer Oberseite der Ölrückführöffnung (122a) niedriger ist als eine Position (s2) einer Oberseite eines Raums, der durch einen untersten Bereich von entweder dem ersten Abdichtungselement (18) oder dem zweiten Abdichtungselement (20), welches sich von der Kurbelwelle (6) weiter entfernt befindet als das jeweils andere erste Abdichtungselement (18) oder zweite Abdichtungselement (20), abgedichtet ist.

8. Ölaustritt-Verhinderungsstruktur nach Anspruch 7, **dadurch gekennzeichnet, dass** die Dammeinrichtung (224a) einstückig mit einer die Kurbelwelle (6) umgebenden Ölauffangeinrichtung (224) ausgebildet ist, die Dammeinrichtung (224a) ring-oder bogenförmig ausgebildet ist, ein Innendurchmesser der Dammeinrichtung (224a) geringer ist als ein Innendurchmesser der Ölauffangeinrichtung (224), das zweite Abdichtungselement (20) an eine Innenoberfläche der Ölauffangeinrichtung (224) gepasst ist, ein Ölrückführrohr (226) an einem unteren Bereich der Dammeinrichtung (224a) befestigt ist, das Ölrückführrohr (226) eine Verbindung zwischen der Ölwanne (202) und dem Bereich zwischen der Dammeinrichtung (224a) und der Verzahnung (10) bereitstellt, eine Position (h4) von einer Oberseite eines Innenumfangs des Ölrückführrohrs (226) niedriger angeordnet ist als die Position (s2) der Oberseite des Raums, der durch den untersten Bereich von entweder dem ersten Abdichtungselement (18) oder dem zweiten Abdichtungselement (20), welches sich von der Kurbelwelle (6) weiter entfernt befindet als das jeweils andere erste Abdichtungselement (18) oder zweite Abdichtungselement (20), abgedichtet ist.

## Revendications

1. Structure pour éviter une fuite d'huile pour un dispositif de démarrage d'un moteur à combustion interne, dans laquelle le dispositif de démarrage comprend un engrenage annulaire (10) qui transmet une force de rotation provenant d'un démarreur à un vilebrequin (6) d'un moteur à combustion interne en faisant tourner le vilebrequin (6), et une partie inférieure d'un élément d'étanchéité (18, 20), qui fournit une étanchéité pour éviter une fuite d'huile sur l'engrenage annulaire (10), se trouve à côté d'une ouverture (2b, 102b, 202b) d'un carter d'huile (2, 102, 202), **caractérisée en ce que:**
un barrage (22, 122, 224a) est formé entre la partie inférieure de l'élément d'étanchéité (18, 20) et l'ouverture (2b, 102b, 202b) du carter d'huile (2, 102, 202), où
une position d'une partie supérieure (d, r) du barrage (22, 122, 224a) est plus élevée qu'une position (s1, s2) d'une partie supérieure d'un espace rendu étanche par la partie la plus basse de l'élément d'étanchéité (18, 20).

2. Structure pour éviter une fuite d'huile selon la revendication 1, **caractérisée en ce qu'**un orifice de retour d'huile (122a) est formé dans une partie inférieure du barrage (122), et l'orifice de retour d'huile (122a) fournit une communication entre le carter d'huile (102) et une zone entre le barrage (122) et l'engrenage annulaire (10).

3. Structure pour éviter une fuite d'huile selon la revendication 2, **caractérisée en ce qu'**une position (h2) d'une partie supérieure de l'orifice de retour d'huile (122a) est plus basse qu'une position (s1, s2) d'une partie supérieure d'un espace rendu étanche par la partie la plus basse de l'élément d'étanchéité (18, 20).

4. Structure pour éviter une fuite d'huile selon la revendication 1, **caractérisée en ce que** le barrage (224a) est intégralement formé avec un déflecteur d'huile (224) qui entoure le vilebrequin (6), un diamètre interne du barrage (224a) est plus petit qu'un diamètre interne du déflecteur d'huile (224), le barrage (224a) a la forme d'un anneau ou la forme d'un arc, l'élément d'étanchéité (20) est ajusté à une surface interne du déflecteur d'huile (224), un tuyau de retour d'huile (226) est fixé à une partie inférieure du barrage (224a), et le tuyau de retour d'huile (226) fournit une communication entre le carter d'huile (202) et une zone entre le barrage (224a) et l'engrenage annulaire (10).

5. Structure pour éviter une fuite d'huile selon la revendication 4, **caractérisée en ce qu'**une position (h4) d'une partie supérieure d'une périphérie interne du tuyau de retour d'huile (226) est plus basse qu'une position (s1, s2) d'une partie supérieure d'un espace rendu étanche par la partie la plus basse de l'élément d'étanchéité (18, 20).

6. Structure pour éviter une fuite d'huile selon la revendication 1, **caractérisée en ce que** l'engrenage annulaire (10) transmet la force de rotation au vilebrequin (6) depuis le démarreur par le biais d'un embrayage à roue libre (16), l'élément d'étanchéité (18, 20) comprend un premier élément d'étanchéité (18) et un deuxième élément d'étanchéité (20), le premier élément d'étanchéité (18) rend un espace entre l'engrenage annulaire (10) et l'embrayage à roue libre (16) étanche, et le deuxième élément d'étanchéité (20) rend un espace entre l'engrenage annulaire (10) et le carter d'huile (2, 102, 202) ou un élément qui se met en contact avec le carter d'huile (2, 102, 202) étanche, et une position (d, r) d'une partie supérieure du barrage (22, 122, 224a) est plus élevée qu'une position (s1) d'une partie supérieure d'un espace rendu étanche par la partie la plus basse de l'un du premier élément d'étanchéité (18) et du deuxième élément d'étanchéité (20) qui est plus proche du vilebrequin (6) qu'un autre élément parmi le premier élément d'étanchéité (18) et le deuxième élément d'étanchéité (20).

7. Structure pour éviter une fuite d'huile selon la revendication 6, **caractérisée en ce qu'**un orifice de retour d'huile (122a) est formé dans une partie inférieure du barrage (122), l'orifice de retour d'huile (122a) fournit une communication entre le carter d'huile (102) et une zone entre le barrage (122) et l'engrenage annulaire (10), et une position (h2) d'une partie supérieure de l'orifice de retour d'huile (122) est plus basse qu'une position (s2) d'une partie supérieure d'un espace rendu étanche par la partie la plus basse de l'un du premier élément d'étanchéité (18) et du deuxième élément d'étanchéité (20) qui est plus éloigné du vilebrequin (6) qu'un autre élément parmi le premier élément d'étanchéité (18) et le deuxième élément d'étanchéité (20).

8. Structure pour éviter une fuite d'huile selon la revendication 7, **caractérisée en ce que** le barrage (224a) est intégralement formé avec un déflecteur d'huile (224) qui entoure le vilebrequin (6), le barrage (224a) a la forme d'un anneau ou la forme d'un arc, un diamètre interne du barrage (224a) est plus petit qu'un diamètre interne du déflecteur d'huile (224), le deuxième élément d'étanchéité (20) est ajusté à une surface interne du déflecteur d'huile (224), un tuyau de retour d'huile (226) est fixé à une partie inférieure du barrage (224a), le tuyau de retour d'huile (226) fournit une communication entre le carter d'huile (202) et la zone entre le barrage (224a) et l'engrenage annulaire (10), une position (h4) d'une partie supérieure d'une périphérie interne du tuyau de retour d'huile (226) est plus basse que la position (s2) de la partie supérieure de l'espace rendu étanche par la partie la plus basse de l'un du premier élément d'étanchéité (18) et du deuxième élément d'étanchéité (20) qui est plus éloigné du vilebrequin (6) que l'autre élément parmi le premier élément d'étanchéité (18) et le deuxième élément d'étanchéité (20).
